# FASCICULE DE BREVET EUROPEEN

(11) **EP 3 741 507 B1**
(45) Date de publication et mention de la délivrance du brevet: **02.06.2021**
(21) Numéro de dépôt: 20172739.3
(22) Date de dépôt: 04.05.2020
(51) Int. Cl.: B23Q 11/08, B23Q 17/20, B23Q 17/24, G05B 19/418

(54) **PROCÉDÉ ET DISPOSITIF POUR LE CONTRÔLE D'UNE PIÈCE EN COURS DE FABRICATION**
VERFAHREN UND VORRICHTUNG FÜR DIE KONTROLLE EINES WERKSTÜCKS WÄHREND SEINER HERSTELLUNG
METHOD AND DEVICE FOR CONTROLLING A PART DURING MANUFACTURING

(30) Priorité: 03.05.2019 FR 1904696
(43) Date de publication de la demande: 25.11.2020
(73) Titulaire: I-MC, 13290 Aix-en-Provence (FR)
(72) Inventeur: NOZAIS, Dominique, 84120 Pertuis (FR); SHAO, Zilong, 13100 Aix-en-Provence (FR); HASCOET, Jean-Yves, 44300 Nantes (FR)
(74) Mandataire: Ipside

(56) Documents cités:
- EP-A1- 3 326 749
- DE-A1-102016 123 597

## Description

### Domaine technique

L'invention concerne le domaine de la fabrication, plus particulièrement, mais non exclusivement, la fabrication additive, l'usinage par enlèvement de matière ou la combinaison de ces modes de fabrication.

L'invention porte plus particulièrement sur le contrôle dimensionnel automatisé des pièces réalisées par ce type de procédé sur machine-outil, entre deux opérations de fabrication, c'est-à-dire sans démontage ou repositionnement de la pièce contrôlée dans la machine et sans modification de la configuration de la machine.

Le procédé et le dispositif objets de l'invention sont adaptés à tout type de série, de la fabrication unitaire à la fabrication en grande-série.

### Technique antérieure

La fabrication d'une pièce comprend, selon des exemples de mise en œuvre, des étapes de mise en forme, organisées selon une gamme de fabrication, mettant en œuvre une ou plusieurs machines-outils opérant par enlèvement de matière ou par addition de matière, sur un brut ou une ébauche, afin de créer des formes définies géométriquement et rapprocher progressivement la forme de ladite pièce de sa forme finale.

Le document EP 2 785 492 décrit des exemples de fabrication d'une pièce comprenant des opérations de mise en forme combinées par fabrication additive et par enlèvement de matière, ainsi que des exemples mettant en œuvre une mesure dimensionnelle intermédiaire entre deux opérations de fabrication.

Par convention, conservée dans tout le texte, une gamme de fabrication est divisée en une succession de phases et comprend au moins une phase.

Chaque phase est divisée en une succession d'opérations, une phase comprenant au moins une opération.

Ainsi, sur machine-outil, une phase correspond à une succession d'opérations de mise en forme, par addition ou enlèvement de matière, au cours desquelles le positionnement de la pièce dans la machine-outil n'est pas modifié, et au cours desquelles la configuration de la machine n'est pas modifiée.

Une opération correspond à une séquence de mise en forme au cours d'une même phase réalisée sans changement d'outil ou d'effecteur.

La mise en œuvre d'un contrôle dimensionnel entre deux opérations de mise en forme sur machine-outil est courante que ce soit en fabrication unitaire ou en fabrication de série automatisée.

Ce contrôle dimensionnel vise généralement à adapter les opérations suivantes, en fonction du résultat des opérations précédentes.

Sur une machine-outil à commande numérique, cette adaptation consiste à modifier des paramètres de correction prédéfinis dans le programme de pilotage de la machine ou dans le directeur de commande de ladite machine, ou dans des cas plus sophistiqués, à modifier les trajectoires des effecteurs au cours d'opérations suivantes.

Afin d'effectuer une telle correction, la précision de l'ensemble de la chaîne de correction, comprenant la mesure, la détermination des écarts par rapport à une cible ou une consigne, la détermination et l'application des corrections, doit être compatible avec les tolérances de réalisation des pièces.

Couramment ces tolérances correspondent à une qualité de réalisation comprise entre la qualité 5 et la qualité 10 selon la norme ISO 286-1 soit, pour donner un ordre de grandeur, entre 1,5/10000^{ème} et 15/10000^{ème} de la dimension contrôlée.

Une telle précision dans la chaîne de correction, ne peut pas être obtenue si la pièce est démontée ou repositionnée ou encore sortie de la machine, y compris sur son montage de positionnement, lors du contrôle. Aussi ladite opération de contrôle doit être réalisée sans changement de phase.

Le document EP 2 785 492 décrit un exemple d'une telle opération de contrôle réalisée avec un dispositif comprenant, dans une tête d'usinage unique, différents effecteurs dont un dispositif de contrôle par palpage.

Sur ce dispositif de l'art antérieur, l'effecteur de contrôle, permet, sans démonter la pièce et sans changer la configuration de la machine, de venir acquérir dans le repère de la machine des points situés sur la pièce en cours de réalisation, au cours d'une opération de palpage.

Ces points permettent ensuite de déterminer des géométries et de contrôler notamment la réalisation de côtes.

Cependant, ce dispositif de l'art antérieur est lent, notamment si de nombreux points doivent être acquis, par exemple pour mettre en évidence des défauts de surface telle qu'une planéité ou une cylindricité.

Ce dispositif de l'art antérieur n'est applicable qu'à un type de machine, comprenant un moyen, généralement une broche, apte à porter ce type de capteur, ainsi un tel système n'est généralement pas applicable à un tour à commande numérique.

De plus, la réalisation d'une mesure, et plus généralement l'acquisition de points à la surface de la pièce, lorsque cette acquisition est réalisée dans la machine, présente des difficultés liées à l'environnement, et notamment à la présence de copeaux ou de fluide de coupe sur les surfaces contrôlées, susceptibles de fausser les mesures et de conduire à des interprétations erronées.

La réalisation de ce type de mesure de l'art antérieur, qui exerce une pression sur la surface concernée, n'est pas adapté pour des contrôles sur des surfaces déformables
Finalement, ce dispositif de l'art antérieur utilise les informations issues des codeurs ou des règles numériques des axes de déplacement de la machine-outil pour obtenir les mesures. Par conséquent les incertitudes liées à ces axes interviennent tant dans la mesure qu'au cours des trajectoires de fabrication, et par suite, certaines erreurs ne peuvent pas être détectées.

Le document EP 3 326 749 , qui est considéré comme l'état de la technique le plus proche, décrit un dispositif de contrôle adapté à une machine d'électroérosion dans lequel une image bidimensionnelle de la surface d'une pièce est acquise par une caméra électronique en cours de réalisation de la pièce de sorte à déterminer des paramètres de rugosité de ladite surface.

### Exposé de l'invention

L'invention vise à résoudre les inconvénients de l'art antérieur et concerne à cette fin un système pour le contrôle d'une pièce en cours de réalisation sur une machine-outil, ledit contrôle étant réalisé dans une même phase à la suite d'une opération de fabrication, la pièce étant dans le volume de travail de ladite machine-outil, lequel système comprend :
- une machine-outil comprenant un montage de mise en position et de maintien en position de la pièce dans ladite machine-outil, et une zone de travail protégée permettant d'accéder au volume de travail de ladite machine-outil ;
- un dispositif de mesure adapté à l'acquisition de points à la surface de la pièce à contrôler ;
- un robot polyarticulé apte à supporter et à déplacer le dispositif de mesure et situé à l'extérieur du volume de travail de la machine-outil ;
- un chariot de support, portant le robot et apte à déplacer ledit robot vis-à-vis de la machine-outil sur laquelle la pièce est réalisée ;
- un ordinateur comprenant des moyens de mémoire, des moyens de calculs et des moyens d'affichage, comprenant dans ses moyens de mémoire un modèle numérique tridimensionnel de la pièce, et apte à acquérir les coordonnées des points acquis par le dispositif de mesure ; lequel système comprend des moyens pour la mesure du positionnement du dispositif de mesure dans la zone de travail protégée.

Ainsi, le système de mesure est situé à l'extérieur de la machine au cours des opérations de fabrication ce qui permet d'utiliser notamment un système de mesure optique apte à acquérir rapidement de nombreux points à la surface de la pièce.

La mesure est indépendante des axes de mouvement de la machine et de leurs défauts éventuels.

Le système est adaptable toute machine existante, sans modification de la machine.

L'invention est mise en œuvre selon les modes de réalisation et les variantes exposées ci-après, lesquels sont à considérer individuellement ou selon toute combinaison techniquement opérante.

Avantageusement, le capteur de mesure est un capteur sans contact, notamment un capteur optique. Ce type de capteur est apte à acquérir un nuage de points sans déplacement du robot au cours de l'acquisition, le capteur restant en position fixe lors de l'acquisition, ou en combinant des acquisitions avec si besoin des déplacements du robot le supportant entre les acquisition ; le dispositif peut ainsi d'évaluer des éléments de cotation sur des entités géométriques seules (dimensions de plans, de cylindres, de trous, de poches, ..) ou combinées (perpendicularité, parallélisme, coaxialité,..) ainsi que des conditions de surface (planéité, cylindricité,..) ou à des niveaux de détail plus fins (ondulations, rugosités, ...).

Avantageusement, le système objet de l'invention comprend un dispositif de détection de présence sans contact protégeant l'accès à la zone de travail protégée. Ainsi, l'opération de contrôle est réalisable en toute sécurité bien que la porte de la machine-outil soit ouverte.

L'invention concerne également un procédé mettant en œuvre le système objet de l'invention selon l'un quelconque de ses modes de réalisation, dans lequel la pièce à contrôler est souillée par des résidus tels que des copeaux ou du fluide de coupe, comprenant à la suite d'une première opération de fabrication réalisée sur la pièce, une opération de contrôle, réalisée sur ladite pièce au moyen du dispositif de mesure, ladite opération de contrôle comprenant les étapes consistant à :
i) déplacer au moyen du chariot le robot afin de lui permettre d'atteindre la zone de travail protégée ;
ii) positionner au moyen du robot le dispositif de mesure relativement à la pièce, en mesurant sa position dans la zone de travail protégée ;
iii) réaliser l'acquisition d'une pluralité de points sur une surface de la pièce ;
iv) comparer la position des points acquis à l'étape iii) avec le modèle tridimensionnel compris dans les moyens de mémoire de l'ordinateur ; lequel procédé comprend au cours de l'étape iv) les opérations consistant à :
   a) ajuster une surface de référence issue du modèle tridimensionnel au nuage de points acquis au cours de l'étape (iii) ;
   b) classer les écarts dimensionnels des points du nuage relativement à cette surface en classes ;
   c) déterminer l'écart type de la distribution des classes par rapport à la surface de référence ;
   d) écarter de l'analyse les points du nuage éloignés de plus d'un écart type de la surface de référence.

Ainsi le procédé objet de l'invention permet d'éliminer du contrôle l'influence de singularités artificielles sur la surface contrôlée.

Avantageusement, le modèle numérique tridimensionnel de la pièce correspond à l'état de la pièce à l'issue de l'opération de fabrication en cours. Ainsi, l'opération de contrôle compare l'état pratique de la pièce à son état théoriquement attendu à l'instant du contrôle.

### Description sommaire des dessins

L'invention est exposée ci-après selon ses modes de réalisation préférés, nullement limitatifs et en référence aux figures 1 à 5 dans lesquelles :
[Fig. 1] la figure 1 est un exemple d'une pièce réalisée par enlèvement de matière et mettant en œuvre des opérations de contrôle au moyen du système et du procédé objet de l'invention ;
[Fig. 2] la figure 2 montre la pièce de la figure 1 dans une configuration d'avancement de la gamme de fabrication au cours de laquelle une opération de contrôle est réalisée ;
[Fig. 3] la figure 3 est une vue d'ensemble de principe du système objet de l'invention selon un exemple de réalisation ;
[Fig. 4] la figure 4 est un exemple d'organigramme de mise en œuvre du procédé objet de l'invention ;
[Fig. 5] et la figure 5 illustre le traitement du nuage de points réalisés pour éliminer l'influence de singularités, la figure 5A donne un exemple schématique d'une surface comportant des traces d'huile coupe, la figure 5B représente le nuage de points de mesure correspondant, et la figure 5C la répartition des écarts des points de ce nuage par rapport au plan moyen théorique.

### Manière(s) de réaliser l'invention

La mise en œuvre du système et du procédé objet de l'invention est exposée selon un exemple de réalisation d'une pièce obtenue en tournage-fraisage réalisée sur un centre à commande numérique de tournage fraisage combiné.

L'invention n'est cependant pas limitée à ce type de machine et s'applique à tout type de machine de fabrication par enlèvement ou addition de matière, seuls ou en combinaison, dans des configurations de tournage, fraisage, rectification plane ou cylindrique ou combinée, sur des machines à cinématique en série ou parallèle, sans que ces exemples ne soient limitatifs.

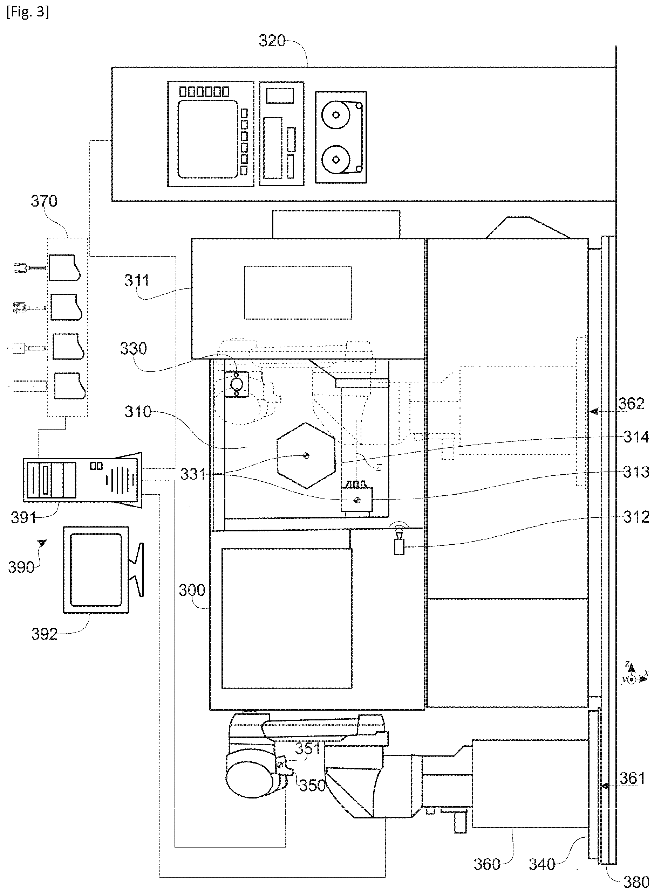

Selon un exemple de réalisation, figure 3, dans un centre de tournage-fraisage, la pièce est maintenue dans un mandrin rotatif (313), lequel mandrin est utilisé pour la mise et le maintien en position de la pièce dans la machine ainsi que pour entraîner la pièce en rotation et lui communiquer un mouvement de coupe de rotation autour d'un axe *z*.

L'axe *z* est horizontal ou vertical.

Selon un exemple de réalisation courant et non limitatif, une tourelle (314) liée à un chariot, supporte une pluralité d'outils de tournage, interchangeables par la rotation de la tourelle, lequel chariot est apte à se déplacer parallèlement à l'axe z de rotation de la pièce, ainsi que selon un axe *x* perpendiculaire à ce dernier, selon des mouvements à commande numérique, à des vitesses et des positions programmées, pour réaliser des opérations de tournage, c'est-à-dire générer par enlèvement de matière des formes présentant une symétrie de rotation par rapport à l'axe z.

Certaines machines comportent plusieurs tourelles et plusieurs chariots, lesquels sont également aptes à se déplacer selon un axe *y* perpendiculaire aux axes *z* et *x*.

Ce type de machine comprend généralement un chariot axial, apte à se déplacer selon l'axe z et à réaliser par exemple des opérations de perçage et d'alésage selon l'axe z au centre de la pièce, le mouvement de coupe étant communiqué à la pièce.

La machine comprend en outre un chariot supportant une broche motorisée apte à supporter un outil de fraisage, de perçage ou d'alésage, outil auquel le mouvement de coupe est communiqué par ladite broche motorisée.

Le chariot supportant cette broche est apte à se déplacer selon les axes *x*, *y* et *z* de la machine, voire selon un axe de rotation autour de l'axe *x*, selon des mouvements pilotés par commande numérique, à des vitesses et des positions programmées afin de réaliser des opérations de fraisage.

Le pilotage du mandrin est également à commande numérique. Au cours d'une opération de tournage, le mandrin communique à la pièce la vitesse de coupe correspondant à ladite opération, au cours d'une opération de fraisage, le mandrin est déplacé dans une position fixe programmée ou communique à la pièce la vitesse d'avance correspondant à l'opération de fraisage réalisée.

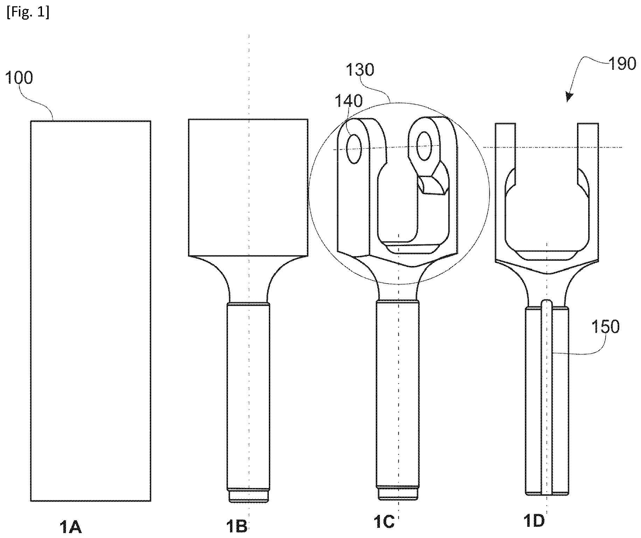

Figure 1, selon un exemple de réalisation d'une pièce mettant en œuvre le procédé et le dispositif de l'invention, la pièce finale (190, figure 1D) est réalisée par enlèvement de matière en partant d'un brut cylindrique (100, figure 1A) par exemple une barre.

Selon un exemple de réalisation la pièce est réalisée en une seule phase, c'est-à-dire sans modification du positionnement de la pièce dans la machine, alternativement elle est réalisée en deux phases, par exemple avec un retournement entre les états correspondant à la figure 1B et la figure 1C.

Les opérations d'usinage comprennent des opérations de tournage en chariotage pour le passage de l'état de la figure 1A à la figure 1B puis des opérations de fraisage selon plusieurs plans et de perçage-alésage pour la réalisation de la fourchette (130) et de l'alésage (140) de ladite fourchette, figure 1C, ainsi qu'une opération de rainurage en fraisage, pour la réalisation de la rainure (150) figure 1D.

Finalement une opération de tronçonnage permet de séparer la pièce (190) de la barre constituant le brut.

Le procédé et le système objet de l'invention sont mis en œuvre afin de contrôler la pièce dans des situations de réalisation intermédiaires, entre des opérations d'usinage.

Ainsi, à titre d'exemple non limitatif, une première opération de contrôle consiste à contrôler figure 1B le positionnement et le diamètre de la partie cylindrique d'ébauche de la fourchette, une deuxième opération de contrôle consiste à contrôler la fourchette (130) et l'alésage (140) au cours ou à l'issue des opérations de fraisage correspondantes.

A titre d'exemple, les contrôles à réaliser au cours de cette deuxième opération de contrôle concernent des contrôles dimensionnels tels que le diamètre de l'alésage (140) ou l'ouverture de la fourchette (130). De tels contrôles sont réalisables sans démontage de la pièce par des techniques de palpage connues de l'art antérieur.

Par contre, les contrôles géométriques réalisés concernent également et à titre d'exemple : le parallélisme des faces extérieures (231, 232) ainsi que des faces intérieures (241, 242) de la fourchette, la perpendicularité de l'axe (245) de l'alésage, par rapport au faces de la (231, 232, 241, 242) de la fourchette, ainsi que par rapport à l'axe de la partie cylindrique (200) de la pièce, la symétrie des branches de la fourchette par rapport à la partie cylindrique (200) ou encore la coplanéité de l'axe (245) de l'alésage et de l'axe de la partie cylindrique (200).

L'homme du métier comprend que si la pièce doit être démontée de la machine et placée dans une machine de mesure tridimensionnelle pour effectuer ces contrôles, il sera impossible de repositionner la pièce dans la machine avec suffisamment de précision pour effectuer les opérations suivantes, ne serait-ce que parce que la pièce doit alors être détachée de la barre constituant le brut.

Par ailleurs, la plupart de ces contrôles ne sont pas réalisable avec la précision adéquate au moyen d'un palpage utilisant les informations délivrées par les axes de la machine à des fins de mesure et ceci indépendamment de la précision intrinsèque du dispositif de palpage.

En effet, en prenant pour exemple la réalisation des surfaces extérieures (231, 232) de la fourchette, celles-ci sont réalisées en fraisage alors que la pièce est maintenue dans le mandrin du centre de tournage-fraisage.

Ainsi, le mandrin est indexé dans une position angulaire donnée et la première surface (231) est réalisée en fraisage de surfaçage.

Puis, le mandrin tourne de 180° par rapport à la première position angulaire, s'indexe dans cette position et la seconde surface (232) est réalisée.

Pour illustrer le problème technique, nous supposons que la machine présente une certaine précision et que lors de la rotation du mandrin entre les deux opérations de fraisage, celui-ci effectue une rotation de 180°+/- ε où ε est une erreur angulaire de positionnement. Ainsi, si tout le reste est parfait dans cette situation, les surfaces présenteront un défaut de parallélisme angulaire de +/- ε selon les pièces.

Lors d'un contrôle par palpage de ces surfaces, il sera nécessaire de procéder de manière similaire, à savoir, palper la première surface (231) puis effectuer une rotation du mandrin de 180° et palper la seconde surface (232). Naturellement, la rotation effectuée par le mandrin lors de cette opération de palpage sera entachée de la même incertitude +/- ε.

Aussi, selon les cas, le défaut angulaire de parallélisme entre les surfaces planes (231, 232) de la pièce ne sera pas détecté, si le même défaut de positionnement est reproduit lors de l'usinage et de la mesure, ou sera amplifiée ou sous-estimé, si l'erreur de positionnement n'est pas reproductible entre l'usinage et le palpage. Dans tous les cas il est impossible d'évaluer de manière fiable ce défaut de parallélisme par un palpage utilisant les informations des axes de la machine pour réaliser la mesure.

Il en est de même pour la direction de l'axe (245) de l'alésage de la fourchette.

Figure 3, le système objet de l'invention comprend une machine-outil (300) à commande numérique, ici un centre de tournage-fraisage. Ladite machine-outil comprend une zone de travail sécurisée (310), correspondant à la zone dans laquelle la pièce est transformée, l'accès à cette zone sécurisée étant protégée par une porte (311) et des moyens de sécurité de sorte que, lorsque ladite porte est ouverte, la machine ne peut fonctionner que dans un mode dit de sécurité et ne peut réaliser des opérations d'usinage.

La machine est pilotée pour ses opérations d'usinage par un directeur de commande numérique (320) programmable.

Le système objet de l'invention comprend un robot (360) polyarticulé, anthropomorphique selon cet exemple de réalisation non limitatif, lequel robot est monté sur un chariot de support (340) permettant de déplacer ledit robot (360) relativement à la machine (300), par exemple sur un rail (380) notamment afin de rapprocher ou d'éloigner le robot de la zone de travail sécurisée (310) de la machine.

Ainsi, lorsque le robot (360) se trouve en position de repli (361), il est possible d'accéder sans gêne à la machine, notamment pour le chargement du brut ou le déchargement de la pièce, ou encore pour installer des outils dans la tourelle (314).

Les opérations de chargement du brut sur la machine peuvent aussi être préparées par le robot (360) lorsqu'il est en position de repli (361)

Avantageusement, les positions de repli (361) et de contrôle (362) permettent aussi d'effectuer le chargement du brut ou le déchargement de la pièce.

Pour effectuer une opération de contrôle, le robot (360) est déplacé dans une position de contrôle (362) lui permettant d'accéder à la zone de travail sécurisée (310) de la machine après ouverture de la porte (311).

A cette fin, le système comprend une barrière lumineuse ou radar de zone (312) protégeant l'accès à la zone de travail protégée (310) au cours des étapes (ii) à (iv) et aux zones de déplacement du robot (360) en général. Ce dispositif permet de sécuriser à la fois la zone protégée (310) lorsque la porte (311) de la machine est ouverte et la zone de déplacement du robot lorsqu'il évolue entre les positions de repli (361) et de contrôle (362) ou encore lorsqu'il est en mouvement sur l'une des deux positions.

Le robot (360) supporte et permet de déplacer un dispositif de mesure sans contact (350). Selon un exemple de réalisation non-limitatif, le dispositif de mesure est un capteur optique émettant un faisceau laser décrivant une ligne qui se reflète sur la surface de la pièce. Un dispositif optique mesure la déformation de cette ligne réfléchie sur la surface, et détermine ainsi le profil de celle-ci selon la ligne projetée ainsi que la distance par rapport à la source laser.

Avantageusement, le dispositif de mesure est autonome comprenant ses propres moyens, de précision élevée, pour déplacer le faisceau laser dans un volume de mesure donné.

Ainsi, tant que la mesure est effectuée dans ce volume de mesure du dispositif de mesure, le robot (360) supportant ledit dispositif de mesure reste fixe.

D'autres technologies de mesure optique, comprenant un ou plusieurs capteurs, sont utilisables, par exemple la projection d'un réseau de lignes laser, permettant selon un principe similaire à celui énoncé plus haut pour une seule ligne, d'obtenir une mesure tridimensionnelle de la surface contrôlée en une seule prise en mesurant la déformation de ce réseau lorsqu'il se réfléchi sur la surface contrôlée.

Le système comprend un poste de supervision (390) comprenant un ordinateur (391) avec des moyens de mémoire et de calcul, ainsi que des moyens de saisie et d'affichage (392).

Le poste de supervision est connecté et échange des informations avec le directeur de commande numérique (320) de la machine, avec le robot (360) et son chariot mobile (340) notamment pour déplacer le robot selon ses axes et relativement à la machine, ainsi qu'avec le dispositif de mesure (350) notamment afin de récupérer les coordonnées des points du nuage de points acquis par ce dispositif.

Avantageusement, le poste de supervision comprend dans ses moyens de mémoire une pluralité de fichiers (370) CAO (Conception Assistée par Ordinateur) correspondant aux définitions géométriques de la pièce au cours des étapes successives de sa fabrication et notamment aux étapes où une opération de contrôle est réalisée.

Selon des modes de réalisation les fichiers CAO sont importés dans les moyens de mémoire du poste de supervision depuis un serveur distant (non représentés) ou sont créés par un logiciel intégré au poste de supervision.

Ces fichiers CAO donnent avantageusement mais sans limitation, des représentations tridimensionnelles de la pièce aux étapes de fabrication considérées.

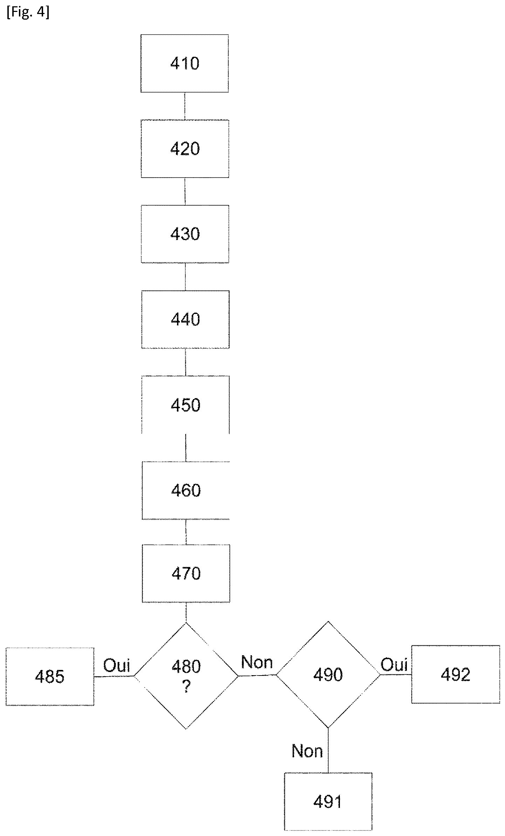

Figure 4, selon un exemple de réalisation du procédé objet de l'invention, celui-ci comprend une première opération de fabrication (410).

La mise en position du brut dans la machine est une opération de fabrication. D'autres opérations de fabrications suivent selon des exemples de réalisation.

Au cours d'une opération préparatoire de contrôle (420) les opérations de fabrication par enlèvement ou addition de matière sont stoppées, les axes de la machine sont dégagés et arrêtés dans une position d'attente de sorte à libérer la zone de travail protégée de la machine et permettre au robot d'y accéder.

Cette opération de contrôle est prévue dans le programme de fabrication.

Selon un mode de réalisation l'opération de contrôle est prévue dans la gamme de fabrication originale enregistrée dans le directeur de commande numérique de la machine.

Selon un autre mode de réalisation une gamme de fabrication modifiée, intégrant l'opération est générée au niveau du poste de supervision et transmise au directeur de commande numérique de la machine.

Ainsi le poste de supervision permet avantageusement de modifier la gamme de fabrication et d'envoyer le programme correspondant au directeur de commande numérique de la machine

Ledit directeur de commande numérique dialogue avec le poste de supervision et informe celui-ci de la mise en configuration de la machine en vue du contrôle. La pièce reste bien entendu en position dans la zone de travail de la machine.

Selon une étape préparatoire de sécurité (430), le poste de supervision commande l'ouverture de la porte de la machine ou informe un opérateur de procéder à cette ouverture.

La porte étant ouverte, le poste de supervision ordonne le déplacement du robot sur son chariot et déclenche le système de sécurité associé (barrière lumineuse ou radar de zone).

L'opération de contrôle peut alors débuter en toute sécurité.

Au cours de l'opération de contrôle (440) le dispositif de mesure porté par le robot est utilisé pour faire l'acquisition d'une multitude de points sur les surfaces de la pièce à contrôler.

A cette fin le robot déplace le dispositif de contrôle selon une configuration définie, calculée de sorte à obtenir une visibilité optimale pour toutes les surfaces à contrôler dans cette position sans avoir à déplacer les axes du robot ou le robot lui-même.

La détermination de cette position de visibilité dite optimale est réalisée par calcul préalablement aux opérations de contrôle.

Ladite position de visibilité optimale dépend de la technologie et des performances du dispositif de mesure utilisé, de l'environnement de la machine dans sa zone de travail ainsi que des surfaces à contrôler et de la position desdites surfaces dans la machine au moment du contrôle.

Lesdits calculs prennent notamment en compte la modélisation géométrique de la machine (300), du robot (360), du capteur et de la pièce en cours de réalisation.

Ainsi, la position optimale de visibilité est en fait une combinaison de la position de la pièce à contrôler et du robot portant le dispositif de mesure et de ses axes.

Selon un mode de réalisation, le dispositif de maintien en position de la pièce est déplacé entre ces acquisitions de sorte à découvrir des surfaces inaccessibles dans une configuration donnée.

Ce déplacement est contrôlé ou ordonné par le poste de supervision via le directeur de commande numérique.

Ainsi, pour reprendre l'exemple présenté plus haut, le mandrin maintenant la pièce effectue une rotation de 180° de sorte à permettre au capteur sans contact d'obtenir une visibilité sur les deux surfaces extérieures de la fourchette.

Cependant, comme le dispositif de mesure est sans contact, qu'il effectue simultanément l'acquisition d'une multitude de points et que le positionnement du système dans la zone protégée est indépendant des axes de la machine, cette rotation est par exemple décomposée en 3 rotations de 60° ou en quatre rotations de 45°.

L'acquisition tridimensionnelle, permet à partir de ces données d'assembler celle-ci entre-elles selon des critères de minimisation d'écart et ainsi de reconstruire la géométrie complète indépendamment de la précision de déplacement et de positionnement angulaire du mandrin.

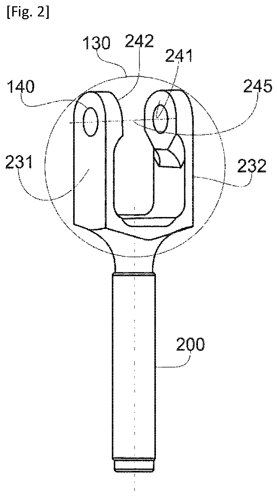

Ainsi, le parallélisme entre les deux surfaces de surfaces extérieures de la fourchette (231, 232, figure 2) est contrôlable indépendamment de la précision de la machine-outil, et ceci bien que les axes de déplacement de ladite machine sont utilisés au cours de la mesure.

Au cours d'une étape (460) de reconstruction géométrique, les différentes vues obtenues sont assemblées de sorte à obtenir une représentation numérique tridimensionnelle de la zone contrôlée.

Au cours d'une étape (470) de comparaison, ladite représentation numérique est comparée au fichier CAO de la pièce au stade de fabrication désiré et enregistré dans les moyens de mémoire.

A cette fin le nuage de points correspondant à la représentation numérique de mesure est balancé tridimensionnellement par rapport au modèle CAO selon des techniques d'optimisation d'écart, consistant à déplacer le nuage de points dans l'espace virtuel selon un nombre de degré de liberté définis, de sorte à minimiser les écarts entre le modèle CAO et ledit nuage de points.

Selon une étape de comparaison (480) les écarts résiduels entre le modèle CAO et le nuage de points sont comparés à des valeurs de contrôles admissibles, lesquelles valeurs de contrôle sont enregistrées dans les moyens de mémoire du poste de supervision et associés aux différentes entités géométriques par rapport au modèle numérique CAO considéré.

Les valeurs de contrôles admissibles sont définies de sorte à pouvoir détecter un défaut avant que le procédé de fabrication ne puisse plus corriger (par exemple, si trop de matière a été enlevé) ; aussi les valeurs de contrôles sont rarement des cotes et tolérances finales attendues sauf dans le cas d'un contrôle au dernier stade de fabrication.

Trois scénarios sont alors possibles et chacun de ces scénarios peut s'appliquer à chacune des entités géométriques contrôlées, à chacune des valeurs de contrôle admissibles contrôlées ou à la pièce contrôlée dans son ensemble.

Ainsi, l'étape de comparaison vérifie d'abord si l'élément contrôlé (cote, entité géométrique ou ensemble de la pièce) présente des écarts compatibles avec les valeurs de contrôles admissibles, par rapport à la géométrie de référence.

Si la réponse est oui, selon un premier scénario (485), le robot est manœuvré pour sortir de la zone de travail sécurisée, puis est déplacé vers sa position de repli, la porte de la machine est refermée et le cycle de fabrication reprend en suivant la gamme de fabrication prévue.

Si la réponse est non, et que les écarts constatés ne sont pas compatibles avec les valeurs de contrôle admissibles, alors un deuxième test (490) est réalisé, visant à évaluer si la situation est rattrapable ou non.

Un exemple de situation non rattrapable en regard de l'exemple de pièce considérée, figure 1C, correspond au diamètre de l'alésage (140) supérieur au diamètre maximum autorisé.

Un autre exemple de situation non rattrapable en regard de la même pièce, figure 2, correspond au diamètre de l'alésage (140) à sa valeur maximale autorisée, l'alésage est donc conforme de ce point de vue, mais le défaut de perpendicularité et/ou de coplanéité de l'axe (245) de cet alésage avec l'axe de la partie cylindrique (200) sont hors tolérance.

Dans ces exemples non limitatifs, la situation n'est pas rattrapable et selon une étape de fin (491) la gamme de fabrication est interrompue et la pièce rebutée.

Ainsi, le système et le procédé objet de l'invention permettent, notamment dans le cas d'une pièce fabriquée en série de rebuter la pièce au plus tôt.

Dans un tel cas de rebut, avant de lancer la fabrication d'une nouvelle pièce, les gammes de fabrications et les correcteurs d'outil mis en œuvre au cours des opérations ayant conduit au non-respect des tolérances sont analysés et le cas échéant corrigés.

Eventuellement, la géométrie de la machine est vérifiée.

Ainsi le système et le procédé objet de l'invention permettent de détecter au plus tôt un problème de calibration de la machine-outil, mais aussi d'usure ou de flexion d'outil, et d'éviter de conserver en production une machine déréglée.

Alternativement, la situation est rattrapable c'est-à-dire que les écarts constatés entre le modèle CAO et la représentation numérique mesurée sont incompatibles avec les valeurs de contrôle admissibles mais peuvent être ramenés dans des tolérances acceptables pour éviter le rebut.

Ainsi dans une situation rattrapable, la pièce peut être remise en conformité après l'étape de contrôle, soit en intercalant une ou plusieurs opérations d'usinage et/ou en modifiant les instructions du programme ou les correcteurs d'outil pour les opérations suivant l'opération précédent le contrôle.

A titre d'exemple, une situation rattrapable, correspond au cas où, figure 1C, le contrôle respecte la valeur de contrôle du diamètre de l'alésage, défini comme inférieure au diamètre final attendu.

Si la différence entre le diamètre réalisé, et le diamètre maximum autorisé compte tenu de la tolérance finale est supérieur au copeau minimum permis par la technologie d'usinage considérée, alors il est possible de réaléser ledit alésage, au cours d'une opération d'alésage supplémentaire intercalée dans la gamme, et d'amener ledit alésage à un diamètre compris dans sa tolérance de fabrication finale.

Dans ce cas, une opération d'alésage supplémentaire est introduite dans la gamme de fabrication.

Ainsi, dans le cas d'une situation rattrapable, au cours d'une étape (492) de modification de gamme, la gamme de fabrication est modifiée, notamment par l'ajout d'opérations complémentaires, éventuellement accompagnée d'une correction du programme ou des correcteurs associés de sorte à éviter que l'erreur, même rattrapable, ne se reproduise sur les pièces suivantes.

Selon des variantes de réalisation, les étapes de continuation de la fabrication (485), de rebut de la pièce (491) ou de modification de la gamme (492) sont réalisées de manière automatique, par exemple en mettant en œuvre des principes d'intelligence artificielle, par une intervention humaine ou de manière assistée en combinant les deux variantes précédentes.

Ainsi, le système objet de l'invention et sa méthode de mise en œuvre sont adaptés à la fois à des fabrications quasi unitaires de pièces à forte valeur ajoutée ou à des fabrications de grande série dans le cadre de l'automatisation de la surveillance de fabrication.

Selon un mode de réalisation avantageux du système objet de l'invention, celui-ci comprend des moyens de localisation du dispositif de mesure dans le repère de la machine-outil.

Selon des variantes, le dispositif de mesure lui-même est utilisé pour déterminer sa propre position dans la machine, par exemple en mesurant un ou plusieurs reliefs particuliers, tels que des sphères, positionnées à des points précis et connus de la machine, ou, le poignet du robot supportant le dispositif de mesure comprend un moyen de détection particulier, tel qu'un réflecteur, un prisme ou une sphère qui coopère avec un moyen de détection fixe installé dans la machine, tel qu'un laser tracker miniature.

Selon une autre variante, figure 3, ces deux alternatives sont combinées, par exemple, le laser tracker fixe (330), installé dans la machine, est apte à mesurer la position (distance, angle) d'un réflecteur (351)installé sur le robot et compare cette position avec la position connue de cibles fixes (331) installées dans la machine de sorte à améliorer la précision.

La détermination de la position du dispositif de mesure dans la machine, permet d'améliorer la précision et la pertinence des corrections apportées aux programmes au cours de l'étape (492) de modification de gamme.

Cette information de position est également utile dans le cas d'une pièce de grande dimension ou les conditions de visibilité impliquent de réaliser la mesure avec plusieurs positions de robot et sans repère distinctif dans le faisceau du capteur.

Le positionnement précis des positions successives du dispositif de mesure dans l'espace machine, permet alors de recaler chaque acquisition dans un repère commun.

La réalisation de la mesure de manière automatique rend celle-ci sensible à la présence de résidus, copeaux, huile de coupe, sur les surfaces à contrôler. Lesquels sont susceptibles d'être confondus avec des défauts de réalisation.

Selon un exemple de réalisation, afin de limiter ce phénomène, la pièce à contrôler est soumise à un soufflage d'air comprimé et/ou à un nettoyage mécanique avant la réalisation du contrôle.

Selon des variantes de réalisation, les moyens de nettoyage ou de soufflage sont portés par la machine-outil ou par le robot.

Cette opération de nettoyage permet d'éliminer les résidus solides tels que les copeaux, en revanche, présente une efficacité moindre vis-à-vis des gouttes de fluide de coupe qui peuvent subsister sur les surfaces.

A cette fin, le procédé objet de l'invention met en œuvre une méthode de traitement des informations permettant d'éliminer ces artifices de mesure ou à tout le moins d'en détecter la présence.

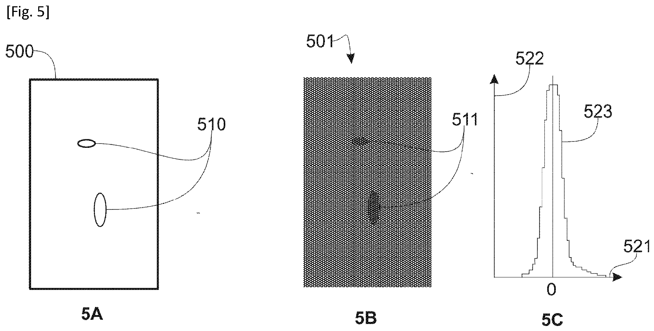

Figure 5, pour illustrer le principe de ce traitement, nous considérons le contrôle d'une entité géométrique, ici une surface plane (500) figure 5A.

L'homme du métier comprend que le principe est applicable au contrôle de toute entité géométrique, plan, cylindre cône, surface quelconque, dès lors que celle-ci est connue, c'est-à-dire qu'elle peut être définie par une surface de référence.

En pratique ladite surface de référence est connue du fichier CAO correspondant à l'entité à contrôler.

La surface plane à contrôler est, selon cet exemple, souillée par plusieurs gouttes (510) de fluide de coupe.

Figure 5B, l'acquisition du nuage de points correspondant à la surface fait apparaître des surépaisseurs (511) localisées correspondant aux dites gouttes.

Au cours d'une opération d'ajustement, l'entité géométrique, ici un plan, est ajustée au nuage de points (501) obtenu par la mesure par exemple par une méthode des moindres carrés.

Figure 5C, les écarts de tous les points du nuage par rapport à cette surface de référence sont triés par classes. Le tracé du nombre de points (522) dans chaque classe d'écart (521) fournit une distribution statistique (523) centrée autour de l'altitude de la surface théorique, ici un plan moyen d'altitude 0, laquelle distribution statistique est caractérisée par un écart type.

Ces écarts représentent à la fois des défauts géométriques réels de la surface, mais reflètent aussi la présence de singularités telles que les gouttes de fluide de coupe.

Les inventeurs ont déterminé que les défauts géométriques réels se situent autour de la moyenne à +/-1 écart type. Ainsi, la présence de points éloignés de plus d'un écart type par rapport à la surface moyenne correspondent à des singularités, qui sont ainsi détectées et permettent de générer un avertissement sur la fiabilité de la mesure, ou alternativement, les points correspondants sont simplement non considérés dans l'analyse, ou remplacés par des points à l'altitude moyenne de la surface.

Ainsi, par ce traitement numérique simple du nuage de points de mesure, les artifices, tels que la présence d'huile de coupe mais aussi de copeaux sur la surface contrôlée sont éliminés tout en générant une alerte sur le traitement réalisé.

L'homme de l'art comprendra que la présence d'un défaut localisé sous une goutte est peu probable et que, dans l'art antérieur, la détection d'un tel défaut, s'il existait, ne serait probablement pas détecté par une machine de mesure tridimensionnelle ; en effet, si le ratio de la surface de la goutte par rapport au plan contrôlé est faible (< 1% de la surface totale par exemple), il est statistiquement improbable que les points de contrôle définis au niveau machine de mesure tridimensionnelle soit localisés dans la surface incriminée.

La description ci-avant et les exemples de réalisation montrent que l'invention atteint le but visé et permet le contrôle automatique d'une pièce au cours de sa réalisation, in situ, sur machine-outil sans changement de phase de fabrication.

## Revendications

1. Système pour le contrôle d'une pièce (190) en cours de réalisation sur une machine-outil, ledit contrôle étant réalisé dans une même phase à la suite d'une opération de fabrication, la pièce étant dans la zone de travail de ladite machine-outil, lequel système comprend :
- une machine-outil (300) comprenant un montage (313) de mise en position et de maintien en position de la pièce dans ladite machine-outil, et une zone de travail protégée (310) permettant d'accéder au volume de travail de ladite machine-outil ;
- un dispositif de mesure (350) adapté à l'acquisition de points à la surface de la pièce à contrôler ;
- un robot polyarticulé (360) apte à supporter et à déplacer le dispositif de mesure (350) et situé à l'extérieur du volume de travail de la machine-outil ;
- un chariot de support (340), portant le robot (360) et apte à déplacer ledit robot vis-à-vis de la machine-outil sur laquelle la pièce est réalisée ;
- un ordinateur (391) comprenant des moyens de mémoire, des moyens de calculs et des moyens d'affichage (392), comprenant dans ses moyens de mémoire un modèle numérique (370) tridimensionnel de la pièce, et apte à acquérir les coordonnées des points acquis par le dispositif de mesure (350) ;
**caractérisé en ce qu'**il comprend, dans la zone de travail protégée (310), des moyens de mesure du positionnement du dispositif de mesure (350) lorsque celui-ci est supporté par le robot polyarticulé (360).

2. Système selon la revendication 1 dans lequel le dispositif de mesure (350) est un dispositif sans contact, notamment un capteur optique.

3. Système selon la revendication 1, comprenant un dispositif de détection de présence (312) sans contact protégeant l'accès à la zone de travail protégée (310).

4. Procédé mettant en œuvre le système selon la revendication 1, dans lequel la pièce à contrôler est souillée par des résidus tels que des copeaux ou du fluide de coupe, comprenant à la suite d'une première opération de fabrication (410) réalisée sur la pièce, une opération de contrôle, réalisée sur ladite pièce au moyen du dispositif de mesure, ladite opération de contrôle comprenant les étapes consistant à :
i) déplacer au moyen du chariot (340) le robot (360) afin de lui permettre d'atteindre la zone de travail protégée (310) ;
ii) positionner au moyen du robot le dispositif de mesure (350) relativement à la pièce, en mesurant sa position dans la zone de travail protégée ;
iii) réaliser l'acquisition (440) d'une pluralité de points sur une surface de la pièce ;
iv) comparer (470) la position des points acquis à l'étape iii) avec le modèle tridimensionnel (370) compris dans les moyens de mémoire de l'ordinateur (391); ce procédé comprenant au cours de l'étape iv) les opérations consistant à:
a) ajuster une surface de référence issue du modèle tridimensionnel (370) au nuage de points (501) acquis au cours de l'étape (iii) ;
b) classer les écarts dimensionnels des points du nuage relativement à cette surface en classes ;
c) déterminer l'écart type de la distribution (523) des classes par rapport à la surface de référence ;
d) écarter de l'analyse les points du nuage éloignés de plus d'un écart type de la surface de référence.

5. Procédé selon la revendication 4, dans lequel le modèle numérique tridimensionnel (370) de la pièce correspond à l'état de la pièce à l'issue de l'opération de fabrication (410) juste précédente à l'étape i).

## Patentansprüche

1. System zur Kontrolle eines in Realisierung in einer Werkzeugmaschine befindlichen Werkstücks (190), wobei die Kontrolle in einer selben Phase infolge eines Fertigungsvorgangs realisiert wird, sich das Werkstück im Arbeitsbereich der Werkzeugmaschine befindet, wobei das System Folgendes umfasst:
- eine Werkzeugmaschine (300), die eine Aufnahme (313) zur Positionierung und Positionshaltung des Werkstücks in der Werkzeugmaschine und einen geschützten Arbeitsbereich (310) umfasst, der es ermöglicht, auf das Arbeitsvolumen der Werkzeugmaschine zuzugreifen;
- eine Messvorrichtung (350), die zur Erfassung von Punkten an der Oberfläche des zu kontrollierenden Werkstücks ausgeführt ist;
- einen mehrgelenkigen Roboter (360), der imstande ist, die Messvorrichtung (350) zu tragen und zu verschieben, und außerhalb des Arbeitsvolumens der Werkzeugmaschine gelegen ist;
- einen Trageschlitten (340), der den Roboter (360) trägt und imstande ist, den Roboter der Werkzeugmaschine, in der das Werkstück realisiert wird, gegenüberliegend zu verschieben;
- einen Rechner (391), der Speichermittel, Berechnungsmittel und Anzeigemittel (392) umfasst, der in seinen Speichermitteln ein dreidimensionales digitales Modell (370) des Werkstücks umfasst, und imstande ist, die Koordinaten der durch die Messvorrichtung (350) erfassten Punkte zu erfassen;
**dadurch gekennzeichnet, dass** es in dem geschützten Arbeitsbereich (310) Mittel zum Messen der Positionierung der Messvorrichtung (350) umfasst, wenn diese von dem mehrgelenkigen Roboter (360) getragen wird.

2. System nach Anspruch 1, wobei die Messvorrichtung (350) eine berührungslose Vorrichtung, insbesondere ein optischer Sensor ist.

3. System nach Anspruch 1, eine berührungslose Präsenzerkennungsvorrichtung (312) umfassend, die den Zugriff auf den geschützten Arbeitsbereich (310) schützt.

4. Verfahren, welches das System nach Anspruch 1 anwendet, wobei das zu kontrollierende Werkstück durch Rückstände, wie Späne oder Kühlmittel verunreinigt ist, das infolge eines ersten Fertigungsvorgangs (410), der an dem Werkstück realisiert wird, einen Kontrollvorgang umfasst, der an dem Werkstück anhand einer Messvorrichtung realisiert wird, wobei der Kontrollvorgang die Schritte umfasst, die darin bestehen:
i) den Roboter (360) anhand des Schlittens (340) zu verschieben, um es ihm zu ermöglichen, den geschützten Arbeitsbereich (310) zu erreichen;
ii) die Messvorrichtung (350) anhand des Roboters in Bezug auf das Werkstück zu positionieren, indem dessen Position in dem geschützten Arbeitsbereich gemessen wird;
iii) die Erfassung (440) einer Vielzahl von Punkten auf einer Oberfläche des Werkstücks zu realisieren;
iv) die Position der im Schritt iii) erfassten Punkte mit dem dreidimensionalen Modell (370), das in den Speichermitteln des Rechners (391) enthalten ist, zu vergleichen (470);
wobei dieses Verfahren im Laufe des Schrittes iv) die Vorgänge umfasst, die darin bestehen:
a) eine aus dem dreidimensionalen Modell (370) stammende Referenzoberfläche an die im Laufe des Schrittes (iii) erfasste Punktwolke (501) anzupassen;
b) die Maßabweichungen der Punkte der Wolke in Bezug auf diese Oberfläche in Klassen einzustufen;
c) die Standardabweichung der Verteilung (523) der Klassen in Bezug auf die Referenzoberfläche zu bestimmen;
d) aus der Analyse jene Punkte der Wolke zu entfernen, die um mehr als eine Standardabweichung von der Referenzoberfläche entfernt sind.

5. Verfahren nach Anspruch 4, wobei das dreidimensionale digitale Modell (370) des Werkstücks dem Zustand des Werkstücks am Ende des Fertigungsvorgangs (410) unmittelbar vor dem Schritt i) entspricht.

## Claims

1. A system for controlling a workpiece (190) being processed on a machine tool, said control being performed in a same phase following a manufacturing operation, the part being in the work area of said machine tool, which system comprises:
- a machine tool (300) comprising an assembly (313) for positioning the workpiece and holding it in position in said machine tool, and a protected work area (310) making it possible to access the working volume of said machine tool;
- a measuring device (350) adapted to acquiring points on the surface of the workpiece to be controlled;
- a polyarticulated robot (360) capable of supporting and moving the measuring device (350) and located outside the working volume of the machine tool;
- a support carriage (340), supporting the robot (360) and capable of moving said robot relative to the machine tool on which the workpiece is manufactured;
- a computer (391) comprising memory means, calculating means and display means (392), comprising in its memory means a three-dimensional digital model (370) of the workpiece, and capable of acquiring the coordinates of points acquired by the measuring device (350);
**characterised in that** it comprises, in the protected work area (310), means for measuring the positioning of the measuring device (350) when the latter is supported by the polyarticulated robot (360).

2. The system according to claim 1, wherein the measuring device (350) is a contactless device, in particular an optical sensor.

3. The system according to claim 1, comprising a contactless presence detecting device (312) protecting access to the protected work area (310).

4. A method implementing the system according to claim 1, wherein the workpiece to be controlled is contaminated by residues such as chips or cutting fluid, comprising following a first manufacturing operation (410) performed on the workpiece, a control operation, performed on said workpiece by means of the measuring device, said control operation comprising steps consisting of:
i) moving the robot (360) by means of the carriage (340) to allow it to reach the protected work area (310);
ii) by means of the robot, positioning the measuring device (350) relative to the workpiece, by measuring its position in the protected work area;
iii) completing the acquisition (440) of a plurality of points on a surface of the workpiece;
iv) comparing (470) the position of points acquired in step iii) with the three-dimensional model (370) included in the memory means of the computer (391);
this method comprising during step iv) operations consisting of:
a) adjusting a reference surface from the three-dimensional model (370) to the point cloud (501) acquired during step (iii);
b) classifying the dimension deviations of the cloud points relative to this surface into classes;
c) determining the deviation type of the distribution (523) of classes relative to the reference surface;
d) removing from the analysis the cloud points that deviate the most from a standard deviation of the reference surface.

5. The method according to claim 4, wherein the three-dimensional digital model (370) of the workpiece corresponds to the state of the workpiece following the manufacturing operation (410) just preceding step i).
